# EUROPÄISCHE PATENTANMELDUNG

(11) **EP 4 582 355 A2**
(43) Veröffentlichungstag der Anmeldung: **09.07.2025**
(21) Anmeldenummer: 25167010.5
(22) Anmeldetag: 17.08.2023
(51) Int. Cl.: B65D 85/804

(54) **GETRÄNKEZUBEREITUNGSSYSTEM ZUR ZUBEREITUNG EINES GETRÄNKS UNTER VERWENDUNG EINER PORTIONSKAPSEL UND VERWENDUNG VON PORTIONSKAPSELN ZUR ZUBEREITUNG EINES GETRÄNKS**

(30) Priorität: 24.08.2022 DE 102022208773
(62) Teilanmeldung aus: 23761075.3
(71) Anmelder: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner

(57) **Zusammenfassung**

Es wird ein Getränkezubereitungssystem zur Zubereitung eines Getränks unter Verwendung einer Portionskapsel vorgeschlagen, wobei das System eine Getränkeherstellungsmaschine und eine Portionskapsel umfasst, wobei die Getränkeherstellungsmaschine eine Brühkammer zur Aufnahme der Portionskapsel aufweist, wobei die Portionskapsel ein Basiselement aufweist, welches einen Hohlraum aufspannt, wobei der Hohlraum teilweise mit einem Getränkerohmaterial gefüllt ist, und wobei die Portionskapsel einen im Hohlraum angeordneten Einsatz aufweist, welcher ein Verrutschen des Getränkerohmaterial im Hohlraum wenigstens teilweise verhindert, wobei der Einsatz ein Wasserverteiler ist, wobei das Getränkezubereitungssystem wenigstens eine erste Portionskapsel und wenigstens eine zweite Portionskapsel umfasst, wobei die erste Portionskapsel einen ersten Einsatz aufweist und wobei die zweite Portionskapsel einen zweiten Einsatz aufweist, wobei der erste Einsatz ungleich dem zweiten Einsatz ausgebildet ist.

## Beschreibung

### Stand der Technik

Die vorliegende Erfindung geht aus von einem Getränkezubereitungssystem zur Zubereitung eines Getränks unter Verwendung einer Portionskapsel, wobei das System eine Getränkeherstellungsmaschine und eine Portionskapsel umfasst, wobei die Getränkeherstellungsmaschine eine Brühkammer zur Aufnahme der Portionskapsel aufweist, wobei die Portionskapsel ein Basiselement aufweist, welches einen Hohlraum aufspannt, wobei der Hohlraum teilweise mit einem Getränkerohmaterial gefüllt ist, und wobei die Portionskapsel einen im Hohlraum angeordneten Einsatz aufweist, welcher ein Verrutschen des Getränkerohmaterial im Hohlraum wenigstens teilweise verhindert.

Derartige Getränkezubereitungssystem sind aus dem Stand der Technik hinlänglich bekannt. Die Portionskapsel ist üblicherweise dazu vorgesehen, in die Brühkammer direkt oder indirekt eingelegt zu werden, wobei die Portionskapsel in der Brühkammer perforiert wird, um Flüssigkeit in Form heißen Wassers unter Druck in den Hohlraum einzuleiten. Durch Wechselwirkung zwischen dem eingeleiteten Wasser mit dem Getränkerohmaterial, insbesondere geröstetem und gemahlenem Kaffee, entsteht ein Getränk, welches die Portionskapsel durch weitere Perforationsstellen verlässt und in ein Gefäß gelangt.

Es sind sowohl vertikal als auch horizontal ausgerichtete Brühkammern bekannt. Gerade bei horizontalen Brühkammern wird die Portionskapsel horizontal gelagert, also auf ihrer Seite. Dabei kann es dazu kommen, dass das Getränkerohmaterial verrutscht, was zu einer unvollständigen Extraktion führen kann. Zudem kann das Getränkerohmaterial auch in die Nähe der die Portionskapsel verschließenden Deckelfolie gelangen, wodurch die eingespritzte Flüssigkeit sich nicht ausreichend über die gesamte Fläche des Getränkerohmaterials verteilen kann, was ebenfalls eine unzureichende Extraktion verursachen kann.

Es ist daher bereits bekannt, einen Wasserverteiler in der Portionskapsel anzuordnen, welcher der einströmenden Flüssigkeit einen Raum bietet, in welcher sich die Flüssigkeit verteilen kann, um anschließend ähnlich einer Dusche durch Öffnungen des Wasserverteiler über eine breite Fläche zu dem Getränkerohmaterial zu gelangen. Teilweise werden derartige Wasserverteiler auch dazu verwendet, das Getränkerohmaterial zu komprimieren. Es sind dabei sowohl starre Wasserverteiler, ähnlich dem erfindungsgemäßen Einsatz, bekannt als auch flexible Wasserverteiler, die beispielsweise als Folie ausgeführt sind, die umlaufend an die Kapselwandung angesiegelt wird.

Schließlich ist es ferner bekannt, dass mittels einer Portionskapsel verschiedene Getränke und insbesondere auch verschiedene Kaffeegetränke zubereitet werden können. So kann beispielsweise ein Espresso oder ein Lungo zubereitet werden, die sich in der Regel vor allem durch das verwendete Flüssigkeitsvolumen unterscheiden. Für die Kaffeezubereitung sind jedoch eine Vielzahl von miteinander interagierenden Parametern relevant, darunter unter anderem der Druck der Flüssigkeit, die Temperatur, das Flüssigkeitsvolumen, der Mahlgrad des Kaffeepulvers, die Menge an Kaffeepulver, der Kompressionsgrad, um nur einige zu nennen.

Da die Brühkammer und die Portionskapsel aufeinander angepasst sind, unter anderem um den hohen, während der Getränkezubereitung wirkenden, Drücken standzuhalten, führt dies jedoch zu dem Problem, dass das mit Getränkerohmaterial zu füllende Volumen der Portionskapsel feststeht. Es kann also mit einem konstanten Volumen an Getränkerohmaterial und einem variierenden Flüssigkeitsvolumen gearbeitet werden, oder das Volumen an Getränkerohmaterial wird verändert, dann ergeben sich jedoch die oben angesprochenen Probleme einer unzureichenden Extraktion.

Aus diesem Grund wurden kürzlich neuartige Getränkezubereitungssysteme vorgeschlagen, die mit Portionskapseln unterschiedlicher Größe und damit einhergehend unterschiedlichem Innenvolumen arbeiten. Die bekannten Portionskapseln lassen sich jedoch in diesen Getränkezubereitungssystemen nicht verwenden und der Nutzer muss sowohl eine neue Getränkezubereitungsmaschine als auch neue Portionskapseln erwerben.

### Offenbarung der Erfindung

Es ist daher eine Aufgabe der vorliegenden Erfindung, ein Getränkezubereitungssystem zur Verfügung zu stellen, welches verschiedene Getränketypen, insbesondere verschiedene Kaffeegetränketypen, in hoher Qualität zubereiten kann, insbesondere unter Verwendung bereits bekannter Getränkezubereitungsmaschinen.

Die Aufgabe der vorliegenden Erfindung wird gelöst mit einem Getränkezubereitungssystem zur Zubereitung eines Getränks unter Verwendung einer Portionskapsel, wobei das System eine Getränkeherstellungsmaschine und eine Portionskapsel umfasst, wobei die Getränkeherstellungsmaschine eine Brühkammer zur Aufnahme der Portionskapsel aufweist, wobei die Portionskapsel ein Basiselement aufweist, welches einen Hohlraum aufspannt, wobei der Hohlraum teilweise mit einem Getränkerohmaterial gefüllt ist, und wobei die Portionskapsel einen im Hohlraum angeordneten Einsatz aufweist, welcher ein Verrutschen des Getränkerohmaterial im Hohlraum wenigstens teilweise verhindert, wobei das Getränkezubereitungssystem wenigstens eine erste Portionskapsel und wenigstens eine zweite Portionskapsel umfasst, wobei die erste Portionskapsel einen ersten Einsatz aufweist und wobei die zweite Portionskapsel einen zweiten Einsatz aufweist, wobei der erste Einsatz ungleich dem zweiten Einsatz ausgebildet ist.

Vorteilhafte Ausgestaltungen und Weiterbildungen der Erfindung sind den Unteransprüchen, sowie der folgenden Beschreibung unter Bezugnahme auf die Zeichnungen entnehmbar.

Die zu diesem Gegenstand der vorliegenden Erfindung erläuterten Vorteile und die zugehörigen Ausführungsformen gelten entsprechend auch für die anderen Gegenstände der vorliegenden Erfindung und umgekehrt.

Das erfindungsgemäße Getränkezubereitungssystem ist besonders vorteilhaft, da durch eine andere Gestaltung eines Einsatzes verschiedene Portionskapseltypen bereitgestellt werden, welche zur Zubereitung verschiedener Getränketypen eingesetzt werden können.

Eine Portionskapsel im Sinne der vorliegenden Erfindung weist ein Basiselement auf, welches einen Hohlraum aufspannt. Vorzugsweise weist die Portionskapsel an einem Ende eine Öffnung auf, die durch einen Deckel, insbesondere eine Deckelfolie, gas- und/oder aromadicht abgeschlossen wird. Der Hohlraum ist teilweise mit einem Getränkerohmaterial gefüllt, d.h. insbesondere, dass wenigstens ein Volumenteil des Hohlraums nicht mit dem Getränkerohmaterial gefüllt ist. Vorzugsweise ist das Basiselement im Wesentlichen rotationssymmetrisch um eine mittig durch die Portionskapsel verlaufenden Rotationsachse ausgebildet. Das Getränkerohmaterial umfasst beispielsweise Kaffeeröstgranulat, Instantkaffee, Schokoladenpulver, Teeverschnitt, Milchpulver und/oder eine Flüssigkeit, einen Sirup, einen Feststoff, ein Pulver, Kaffee- oder Kakaosatz, und/oder Teeblätter. Die Portionskapsel kann eine oder mehrere Getränkerohmaterialien enthalten.

Gemäß einer bevorzugten Ausführungsform der vorliegenden Erfindung ist vorgesehen, dass das Basiselement aus Kunststoff gefertigt ist. Vorzugsweise wird das Basiselement durch Kalt- oder Warmverformung, insbesondere Tiefziehen hergestellt. Die Ausgestaltung des Basiselements mit Hohlraum wird vorzugsweise durch Thermoformen, beispielsweise Tiefziehen mittels Unterdruck, Überdruck und/oder einem beweglichen Stempel, erzeugt. Alternativ wird die Portionskapsel mittels Spritzgussverfahren, insbesondere im Einkomponenten-, Mehrkomponenten- oder In-Mold-Verfahren, hergestellt. Das Basiselement ist vorzugsweise aus Polyethylen (PE), Polypropylen (PP), Polyvinylchlorid (PVC), Polymethylmetacrylat (PMMA), Polycarbonat (PC), Polystyrol (PS), Polyphenylenether (PPO) oder Polyethylenterephthalat (PET) ausgebildet ist.

Der Deckel, insbesondere die Deckelfolie, ist vorzugsweise aus Polyethylen (PE), Polypropylen (PP), Polyvinylchlorid (PVC), Polymethylmetacrylat (PMMA), Polycarbonat (PC), Polystyrol (PS), Polyphenylenether (PPO) oder Polyethylenterephthalat (PET) ausgebildet ist. Besonders bevorzugt ist der Deckel, insbesondere die Deckelfolie, mehrlagig vorgesehen, wobei ganz besonders bevorzugt wenigstens eine Lage ein Aluminiummaterial umfasst. Der Deckel umfasst vorzugsweise eine Kunststoff-Aluminium-Verbundfolie oder eine Kunststofffolie oder eine Mehrschicht-Kunststofffolie. Denkbar ist, dass die Deckelfolie und das Basiselement wenigstens teilweise aus dem gleichen Material gefertigt sind.

Das Basiselement ist bevorzugt kegelstumpfförmig, kegelförmig, zylinderförmig, sphärisch, hemisphärisch, elliptisch oder teilelliptisch ausgebildet. Das Basiselement ist vorzugsweise starr oder halbstarr ausgebildet.

Ferner weist die Portionskapsel nun einen im Hohlraum angeordneten Einsatz auf, welcher ein Verrutschen des Getränkerohmaterial im Hohlraum wenigstens teilweise verhindert. Vorzugsweise ist der Einsatz ein wenigstens teilweise starrer Einsatz. Besonders bevorzugt ist der Einsatz form-, kraft- und/oder stoffschlüssig mit dem Basiselement verbunden. Der Einsatz umfasst vorzugsweise eine umlaufende Seitenwand und einen Bodenbereich, wobei der Einsatz einen, insbesondere oberen, Teil des Hohlraums von einem weiteren, insbesondere unteren, Teil des Hohlraums trennt, wobei das Getränkerohmaterial in dem weiteren Hohlraum angeordnet ist. Der Bodenbereich weist vorzugsweise eine Vielzahl an Öffnungen auf, durch die die Flüssigkeit in das Getränkerohmaterial eintreten kann, wobei die Öffnungen besonders bevorzugt derart dimensioniert sind, dass zwar die Flüssigkeit hindurchtreten kann, nicht jedoch das Getränkerohmaterial. Besonders bevorzugt ist der Bodenbereich des Einsatzes im Wesentlichen flach vorgesehen, d.h. insbesondere der Bodenbereich ist parallel zu einer durch die Öffnung der Portionskapsel definierte Ebene vorgesehen. Ganz besonders bevorzugt sind die Öffnungen des Bodenbereichs homogen verteilt. Insbesondere ist der Bodenbereich siebartig ausgebildet. Vorzugsweise weist der Einsatz einen sich nach außen erstreckenden, umlaufenden Vorsprung auf, wobei der Vorsprung insbesondere lippenartig vorgesehen ist, worüber der Einsatz form- und/oder kraftschlüssig mit der Wandung des Basiselements verbunden ist, insbesondere geklemmt. Ganz besonders bevorzugt ist der Einsatz ortsfest in dem Basiselement angeordnet. Dies bedeutet insbesondere, dass sich die relative Position des Einsatzes gegenüber dem Basiselement auch unter dem Einfluss des Getränkerohmaterials, der Flüssigkeit und/oder des Getränks im Wesentlichen nicht ändert.

Das Basiselement weist vorzugsweise in der Nähe der Öffnung eine Stapelschulter auf, d.h. einen Vorsprung, der derart vorgesehen ist, dass wenn mehrere leere Basiselemente ineinander gestapelt sind die Bodenbereiche der Basiselemente voneinander beabstandet sind, so dass die Basiselemente einfach voneinander trennbar sind. Ferner kann das Basiselement auf seiner Außenseite eine Vielzahl von konzentrisch angeordneten und umlaufenden Rillen und/oder Vorsprüngen aufweisen. Vorzugsweise weist das Basiselement einen die Öffnung umgebenden, flanschartigen Rand auf, der sich besonders bevorzugt in einer Ebene mit der Öffnung radial nach außen erstreckt. Besonders bevorzugt wird der Deckel, insbesondere die Deckelfolie, an dem Rand befestigt, insbesondere gesiegelt.

Erfindungsgemäß ist nun vorgesehen, dass das das Getränkezubereitungssystem wenigstens eine erste Portionskapsel und wenigstens eine zweite Portionskapsel umfasst, wobei die erste Portionskapsel einen ersten Einsatz aufweist und wobei die zweite Portionskapsel einen zweiten Einsatz aufweist, wobei der erste Einsatz ungleich dem zweiten Einsatz ausgebildet ist. Hierdurch wird es in besonders vorteilhafter Weise ermöglicht, dass lediglich durch die Wahl eines geeigneten Einsatzes unterschiedliche Getränke in hoher Qualität zubereitet werden können. Der Fachmann versteht, dass die erste Portionskapsel insbesondere einem ersten Portionskapseltyp entspricht und die zweite Portionskapsel insbesondere einem zweiten Portionskapseltyp. Vorzugsweise umfasst das Getränkezubereitungssystem weitere Portionskapseltypen, beispielsweise eine dritte Portionskapsel und/oder eine vierte Portionskapsel, die jeweils einen dritten bzw. vierten Einsatz umfassen, wobei der dritte Einsatz ungleich dem ersten, zweiten und vierten Einsatz ist und/oder der vierte Einsatz ungleich dem ersten, zweiten und vierten Einsatz ist. Vorzugsweise ist der erste Einsatz und/oder der zweite Einsatz rotationssymmetrisch bezüglich der Längsachse der Portionskapsel ausgebildet. Vorzugsweise sind der erste Einsatz und der zweite Einsatz an der gleichen Stelle mit dem Basiselement verbunden.

Besonders bevorzugt ist eine Oberkante des ersten Einsatzes auf der gleichen Höhe relativ zu dem Basiselement wie eine Oberkante des zweiten Einsatzes angeordnet.

Gemäß einer bevorzugten Ausführungsform ist vorgesehen, dass der zweite Einsatz entlang der Längsachse der Portionskapsel, welche insbesondere einer Rotationsymmetrieachse entspricht, eine größere Erstreckung als der erste Einsatz aufweist. Hierdurch ist es in vorteilhafter Weise möglich, insbesondere bei ansonsten unveränderten Maßen sowohl des Basiselements als auch des Einsatzes, hier insbesondere einem identischen Durchmesser, das dem Getränkerohmaterial zur Verfügung stehenden Volumen zu ändern.

Gemäß einer bevorzugten Ausführungsform ist vorgesehen, dass sich der erste Einsatz entlang der Längsachse über 20 bis 40 Prozent, bevorzugt 25 bis 35 Prozent, besonders bevorzugt von 27,5 bis 32,5 Prozent der Gesamterstreckung der Portionskapsel entlang der Längsachse erstreckt. Hierdurch wird in vorteilhafter Weise indirekt auch das dem Getränkerohmaterial zur Verfügung stehende Volumen definiert.

Gemäß einer bevorzugten Ausführungsform ist vorgesehen, dass der erste Einsatz entlang der Längsachse eine Erstreckung von 4 bis 10 mm, bevorzugt 6 bis 8 mm, besonders bevorzugt 6,5 bis 7,5 mm aufweist. Die Erfinder haben herausgefunden, dass eine derartige Erstreckung des ersten Einsatzes insbesondere zur Zubereitung eines Lungo-Kaffeegetränks besonders vorteilhaft ist.

Gemäß einer bevorzugten Ausführungsform ist vorgesehen, dass sich der zweite Einsatz entlang der Längsachse über 40 bis 65 Prozent, bevorzugt 45 bis 60 Prozent, besonders bevorzugt von 50 bis 55 Prozent der Gesamterstreckung der Portionskapsel entlang der Längsachse erstreckt. Hierdurch wird in vorteilhafter Weise indirekt auch das dem Getränkerohmaterial zur Verfügung stehende Volumen definiert.

Gemäß einer bevorzugten Ausführungsform ist vorgesehen, dass der zweite Einsatz entlang der Längsachse eine Erstreckung von 8 bis 18 mm, bevorzugt 12 bis 14 mm, besonders bevorzugt 12,5 bis 13,5 mm aufweist. Die Erfinder haben herausgefunden, dass eine derartige Erstreckung des ersten Einsatzes insbesondere zur Zubereitung eines Espresso besonders vorteilhaft ist.

Gemäß einer bevorzugten Ausführungsform ist vorgesehen, dass der erste Einsatz ein kleineres effektives Volumen als der zweite Typ von Einsatz aufweist. Unter einem effektiven Volumen soll dabei insbesondere der freie Teil des Innenvolumens des Hohlraums verstanden werden, der auf der dem Getränkerohmaterial abgewandten Seite des Einsatzes angeordnet ist. Dieses effektive Volumen ist dabei vorzugsweise dasjenige Volumen, welches der in die Portionskapsel eingebrachten Flüssigkeit zur Verfügung steht und entspricht somit insbesondere einem Flüssigkeitssammelvolumen. Insbesondere wenn das Basiselement der ersten Portionskapsel vorzugsweise identisch zu dem Basiselement der zweiten Portionskapsel ausgebildet ist, ist somit insbesondere das Volumen, in dem das Getränkerohmaterial einfüllbar ist, der ersten Portionskapsel größer als das entsprechende Volumen der zweiten Portionskapsel. Es wird darauf hingewiesen, dass dies jedoch nicht gleichbedeutend sein muss mit einem entsprechenden kleineren bzw. größeren Volumen des Getränkerohmaterials. Einerseits ist es möglich, dass nicht das gesamte dem Getränkerohmaterial zur Verfügung stehende Volumen mit Getränkerohmaterial ausgefüllt ist, andererseits kann die erste Portionskapsel und/oder die zweite Portionskapsel weitere Elemente umfassen, die das zur Verfügung stehende Volumen reduzieren, beispielsweise Filterelemente oder dergleichen. Vorzugsweise umfassen die erste Portionskapsel und/oder die Portionskapsel jedoch keine weiteren Elemente oder identische weitere Elemente, insbesondere wenigstens ein identisches Filterelement im Bodenbereich.

Gemäß einer bevorzugten Ausführungsform ist vorgesehen, dass der erste Einsatz 25 bis 45 Prozent, bevorzugt 30 bis 42 Prozent und besonders bevorzugt 34 bis 38 Prozent des Innenvolumens des Hohlraums effektiv einnimmt. Hierdurch ist das, insbesondere für die Flüssigkeit, das Getränkerohmaterial und/oder das Getränk nutzbare Volumen der Portionskapsel vorteilhafterweise durch den ersten Einsatz einstellbar.

Gemäß einer bevorzugten Ausführungsform ist vorgesehen, dass der zweite Einsatz 50 bis 65 Prozent, bevorzugt 55 bis 60 Prozent und besonders bevorzugt 57 bis 58 Prozent des Innenvolumens des Hohlraums effektiv einnimmt. Hierdurch ist das, insbesondere für die Flüssigkeit, das Getränkerohmaterial und/oder das Getränk nutzbare Volumen der Portionskapsel vorteilhafterweise durch den ersten Einsatz einstellbar.

Gemäß einer bevorzugten Ausführungsform ist vorgesehen, dass die erste Portionskapsel eine erste Menge an Getränkerohmaterial aufweist und wobei die zweite Portionskapsel eine zweite Menge an Getränkerohmaterial aufweist, wobei die erste Menge ungleich der zweiten Menge ist. Hierdurch ist es in besonders vorteilhafter Weise möglich, unterschiedliche Getränke zuzubereiten, insbesondere unter Verwendung von Basiselementen mit in Wesentlichen gleichen Außenmaßen.

Gemäß einer bevorzugten Ausführungsform ist vorgesehen, dass die erste Menge größer als die zweite Menge ist. Hierdurch ist es beispielsweise möglich, dass die erste Portionskapsel zur Herstellung eines Getränks mit einem größeren Volumen einsetzbar ist als die zweite Portionskapsel. Beispielsweise ist die erste Portionskapsel zur Herstellung eines Lungo vorgesehen, während die zweite Portionskapsel zur Herstellung eines Espresso ausgebildet ist.

Gemäß einer bevorzugten Ausführungsform ist vorgesehen, dass die erste Menge 5,5 bis 9,5 g, bevorzugt 6,5 bis 8,5 g, besonders bevorzugt 7 bis 8 g umfasst. Die Erfinder haben überraschend herausgefunden, dass diese Menge an Getränkerohmaterial insbesondere für die Herstellung eines qualitativ hochwertigen Lungo optimal ist.

Gemäß einer bevorzugten Ausführungsform ist vorgesehen, dass die erste Menge 55 bis 75 Prozent, bevorzugt 58 bis 70 Prozent und besonders bevorzugt 62 bis 66 Prozent des Innenvolumens des Hohlraums effektiv einnimmt. In vorteilhafter Weise wird somit das zur Verfügung stehende Innenvolumen des Hohlraums optimal genutzt. Vorzugsweise füllt dabei die erste Menge nicht das gesamte durch den ersten Einsatz bereitgestellte Volumen aus. Besonders bevorzugt verbleibt ein vorbestimmtes Leervolumen in dem durch den ersten Einsatz abgegrenzten Teil des Hohlraums. Ganz besonders bevorzugt beträgt das Leervolumen weniger als 20%, noch mehr bevorzugt weniger als 10% und insbesondere weniger als 5% des effektiv zur Verfügung stehenden Volumens.

Gemäß einer bevorzugten Ausführungsform ist vorgesehen, dass die zweite Menge 4 bis 8 g, bevorzugt 5 bis 7 g, besonders bevorzugt 5,5 bis 6,5 g umfasst. Die Erfinder haben überraschend herausgefunden, dass diese Menge an Getränkerohmaterial insbesondere für die Herstellung eines qualitativ hochwertigen Espresso optimal ist.

Gemäß einer bevorzugten Ausführungsform ist vorgesehen, dass die zweite Menge 45 bis 50 Prozent, bevorzugt 40 bis 45 Prozent und besonders bevorzugt 42 bis 43 Prozent des Innenvolumens des Hohlraums effektiv einnimmt. In vorteilhafter Weise wird somit das zur Verfügung stehende Innenvolumen des Hohlraums optimal genutzt. Vorzugsweise füllt dabei die erste Menge nicht das gesamte durch den ersten Einsatz bereitgestellte Volumen aus. Besonders bevorzugt verbleibt ein vorbestimmtes Leervolumen in dem durch den ersten Einsatz abgegrenzten Teil des Hohlraums. Ganz besonders bevorzugt beträgt das Leervolumen weniger als 20%, noch mehr bevorzugt weniger als 10% und insbesondere weniger als 5% des effektiv zur Verfügung stehenden Volumens.

Gemäß einer bevorzugten Ausführungsform ist vorgesehen, dass die Gesamterstreckung entlang der Längsachse, das Außenvolumen und/oder die äußere Formgebung der ersten Portionskapsel identisch zur zweiten Portionskapsel ist, wobei die Gesamterstreckung insbesondere zwischen 20 und 32, bevorzugt zwischen 25 und 28, besonders bevorzugt zwischen 26 und 27 mm beträgt. Vorzugsweise sind die Außenmaße des Basiselements der ersten Portionskapsel im Wesentlichen identisch zu den Außenmaßen des Basiselements der zweiten Portionskapsel. Dies ist ganz besonders vorteilhaft, da somit die erste und zweite Portionskapsel in der gleichen Brühkammer und/oder der gleichen Getränkezubereitungsmaschine sicher verwendbar sind, da die Brühkammer ohne Modifikationen optimal an die erste Portionskapsel und die zweite Portionskapsel angepasst ist.

Gemäß einer bevorzugten Ausführungsform ist vorgesehen, dass das Innenvolumen des Hohlraums zwischen 20 und 27 ml, bevorzugt zwischen 22 und 25 ml, besonders bevorzugt zwischen 23 und 24 ml und ganz besonders bevorzugt bei im Wesentlichen 23,5 ml liegt. In besonders vorteilhafter Weise ist dieses Innenvolumen optimal, um einerseits der einströmenden Flüssigkeit genügend Raum zum Sammeln bereitzustellen im Sinne eines Einspritzraums, und andererseits genügend Raum, d.h. Volumen, für unterschiedliche Mengen an Getränkerohmaterial bereitzustellen, so dass eine Vielzahl von unterschiedlichen Getränken optimal zubereitet werden können.

Gemäß einer bevorzugten Ausführungsform ist vorgesehen, dass das effektive Volumen des ersten Einsatzes zwischen 6 und 10 ml, bevorzugt zwischen 7 und 9 ml und besonders bevorzugt bei im Wesentlichen 8 ml liegt. Dieses effektive Volumen ist vorzugsweise der Teil des Innenvolumens des Hohlraums, welcher dem Getränkerohmaterial nicht zugänglich ist und/oder der Teil des Innenvolumens, der der Flüssigkeit nach dem Einbringen in die Portionskapsel und vor Durchtreten durch den ersten Einsatz zur Verfügung steht.

Gemäß einer bevorzugten Ausführungsform ist vorgesehen, dass das Volumen der ersten Menge zwischen 13,5 und 17,5 ml, bevorzugt zwischen 14,5 und 15,5 ml und besonders bevorzugt bei im Wesentlichen 15,5 ml liegt. Die Erfinder haben überraschend herausgefunden, dass dieses Volumen an Getränkerohmaterial insbesondere für die Herstellung eines qualitativ hochwertigen Lungo optimal ist.

Gemäß einer bevorzugten Ausführungsform ist vorgesehen, dass das effektive Volumen des zweiten Einsatzes zwischen 8 und 13 ml, bevorzugt zwischen 10 und 11 ml und besonders bevorzugt bei im Wesentlichen 10,5 ml liegt. Dieses effektive Volumen ist vorzugsweise der Teil des Innenvolumens des Hohlraums, welcher dem Getränkerohmaterial nicht zugänglich ist und/oder der Teil des Innenvolumens, der der Flüssigkeit nach dem Einbringen in die Portionskapsel und vor Durchtreten durch den ersten Einsatz zur Verfügung steht.

Gemäß einer bevorzugten Ausführungsform ist vorgesehen, dass das Volumen der zweiten Menge zwischen 10,5 und 15,5 ml, bevorzugt zwischen 12,5 und 13,5 ml und besonders bevorzugt bei im Wesentlichen 13 ml liegt. Die Erfinder haben überraschend herausgefunden, dass dieses Volumen an Getränkerohmaterial insbesondere für die Herstellung eines qualitativ hochwertigen Espresso optimal ist.

Der Fachmann versteht, dass die Maße Menge, also insbesondere Masse, und Volumen unter Standardbedingungen entsprechend äquivalent sein können, jedoch nicht immer sein müssen. Insbesondere hängt dies auch von dem Komprimierungsgrad des Kaffeepulvers ab.

Ein weiterer Gegenstand der vorliegenden Erfindung ist eine Verwendung einer ersten Portionskapsel und/oder einer zweiten Portionskapsel zur Zubereitung eines Getränks in einem Getränkezubereitungssystem gemäß der vorliegenden Erfindung.

Vorteilhafte Ausgestaltungen und Weiterbildungen der Erfindung sind den Unteransprüchen, sowie der folgenden Beschreibung unter Bezugnahme auf die Zeichnungen entnehmbar.

Die zu diesem Gegenstand der vorliegenden Erfindung erläuterten Vorteile und die zugehörigen Ausführungsformen gelten entsprechend auch für die anderen Gegenstände der vorliegenden Erfindung und umgekehrt.

Weitere Einzelheiten, Merkmale und Vorteile des Getränkezubereitungssystems und/oder der Verwendung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Portionskapseln, welche den wesentlichen Erfindungsgedanken nicht einschränken.

### Kurze Beschreibung der Zeichnungen

- **Figuren 1a und 1b**: zeigen eine perspektivische Ansicht eines Basiselements einer Portionskapsel gemäß einer beispielhaften Ausführungsform der vorliegenden Erfindung.
- **Figur 2**: zeigt einen seitlichen Querschnitt einer Portionskapsel gemäß der beispielhaften Ausführungsform der vorliegenden Erfindung.
- **Figuren 3a und 3b**: zeigen schematische Querschnitte eines ersten Einsatzes und eines zweiten Einsatzes gemäß einer beispielhaften Ausführungsform der vorliegenden Erfindung.
- **Figur 4a**: zeigt einen schematischen Querschnitt einer ersten Portionskapsel gemäß einer beispielhaften Ausführungsform der vorliegenden Erfindung.
- **Figur 4b**: zeigt einen schematischen Querschnitt einer zweiten Portionskapsel gemäß einer beispielhaften Ausführungsform der vorliegenden Erfindung.

### Ausführungsformen der Erfindung

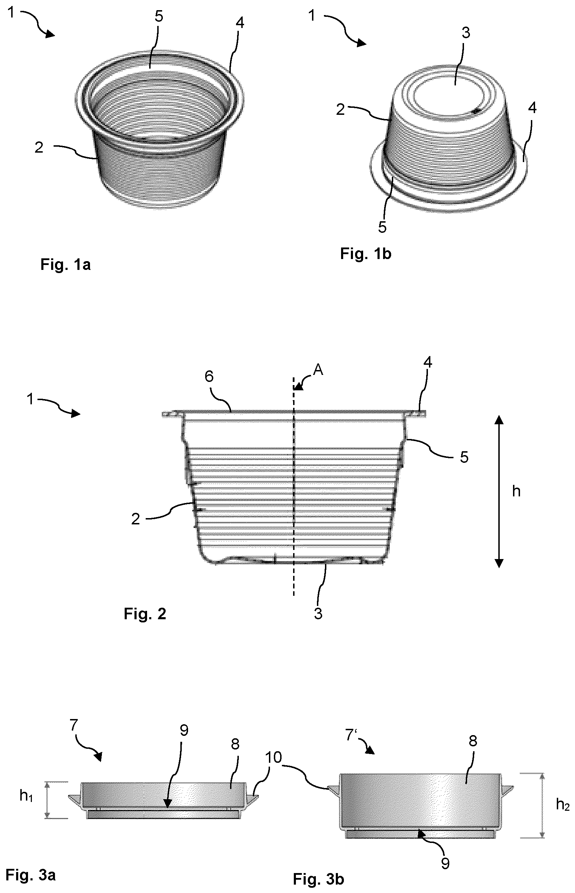

In den **Figuren 1a und 1b** sind perspektivische Ansichten eines Basiselements 2 einer Portionskapsel 1, 1' gemäß einer beispielhaften Ausführungsform der vorliegenden Erfindung dargestellt. Eine derartige Portionskapsel 1, 1' ist dazu vorgesehen in eine Brühkammer einer Getränkezubereitungsmaschine eingesetzt zu werden. Vorzugsweise wird die Portionskapsel 1, 1' dabei in einem Bodenbereich 3 und in einem die Öffnung des Basiselements 2 hermetisch verschließenden Deckels, insbesondere einer Deckelfolie 6, durch entsprechende Aufstechmittel perforiert und Flüssigkeit unter Druck in das Basiselement 2 eingeleitet. Bei der Flüssigkeit handelt es sich dabei vorzugsweise um kaltes oder heißes Wasser. Das Wasser wird dabei insbesondere für Zubereitung von Kaffeegetränken unter einem Druck von 8-12 bar in die Portionskapsel 1, 1' eingeleitet.

In der Portionskapsel 1, 1' ist ein Getränkerohmaterial enthalten, welches mit der Flüssigkeit unter Bildung eines Getränks zusammenwirkt, welches anschließend über den Bodenbereich 3 aus der Portionskapsel 1, 1' ausgeleitet wird.

Derartige Getränkezubereitungsmaschinen sind hinlänglich bekannt und werden daher im Folgenden nicht näher beschrieben.

Das Basiselement 2 der Portionskapsel ist vorzugsweise kegelstumpfförmig ausgebildet und umfasst eine Seitenwand und einen einstückig damit ausgebildeten Bodenbereich 3. Durch die Seitenwand und den Bodenbereich 3 wird ein einseitig offener Hohlraum definiert, in welchem das Getränkerohmaterial, welches der Übersichtlichkeit halber vorliegend und auch im Folgenden nicht dargestellt wird, angeordnet ist. Ggf. umfasst die Portionskapsel 1, 1' vorzugsweise im Bodenbereich 3 ein Filterelement, beispielsweise eine im Wesentlichen kreisförmige und umlaufend in dem Bodenbereich angesiegelte Scheibe aus einem Vlies- und/oder Filzmaterial.

Nach Befüllen des Hohlraums mit dem Getränkerohmaterial wird die Öffnung hermetisch mit einem Deckel, beispielsweise einer Deckelfolie 6, verschlossen. Hierzu weist das Basiselement 2 umlaufend und angrenzend an die Öffnung einen flanschartigen Rand 4 auf, der eine im Wesentlichen ebene Fläche bereitstellt, an welcher die Deckelfolie 6 befestigbar ist.

Das Basiselement 2 ist beispielsweise aus Kunststoff gefertigt, insbesondere aus einer Kunststofffolie tiefgezogen. Die Deckelfolie 6 umfasst besonders bevorzugt eine mehrschichtige Folie, insbesondere eine Kunststoffverbundfolie mit wenigstens einer Barriereschicht. Die Barriereschicht kann beispielsweise Aluminium umfassen.

Vorliegend sind auf der Außenseite des Basiselements 2 eine Vielzahl von konzentrischen, umlaufenden und voneinander beabstandeten, hier horizontal angeordneten Rillen bzw. Vorsprüngen angeordnet. Diese verstärken das Basiselement und/oder erfüllen eine lediglich ästhetische Funktion.

Um die Lagerung der Basiselemente 2 vor bzw. bei der Herstellung der Portionskapseln 1, 1' zu vereinfachen, umfasst das Basiselement 2 vorzugsweise unterhalb des flanschartigen Randes 4 einen Vorsprung in der Seitenwand in Form einer Stapelschulter 5. Ineinander gestapelte Basiselemente 2 lagern somit formschlüssig über die Stapelschultern 5 aufeinander, so dass die Bodenbereiche 3 voneinander beabstandet sind. Hierdurch sind die Basiselemente 2 besonders einfach entstapelbar.

In **Figur 2** ist ein seitlicher Querschnitt einer Portionskapsel 1, 1' gemäß der beispielhaften Ausführungsform der vorliegenden Erfindung dargestellt. Die hier gezeigte Ausführungsform entspricht dabei im Wesentlichen der im Zusammenhang mit den **Figuren 1a und 1b** erläuterten Ausführungsform, so dass auf die entsprechenden Ausführungen verwiesen wird.

Deutlich ist in **Figur 2** der horizontale flanschartige Rand 4 zu erkennen, an dem die Deckelfolie 6 befestigt, insbesondere angesiegelt, ist. Wie bereits in den **Figuren 1a und 1b** zu erkennen ist, ist das Basiselement 2 vorzugsweise rotationssymmetrisch ausgebildet, insbesondere relativ zu einer Längsachse A, die mittig durch die Portionskapsel 1, 1' verläuft, in der Orientierung der vorliegenden Zeichnung also vertikal.

Ferner ist deutlich die Stapelschulter 5 unterhalb des Randes 4 erkennbar. Die Portionskapsel 1, 1' weist vorzugsweise eine axiale Länge bzw. Höhe h, also eine maximale axiale Erstreckung parallel zu der Längsachse A, von etwa 26,6 mm auf.

In der Darstellung der **Figur 2** ist zum einen der Übersichtlichkeit halber kein Getränkerohmaterial dargestellt, zum anderen fehlt hier ein Einsatz 7, 7' der in der erfindungsgemäßen Portionskapsel 1, 1' angeordnet ist.

In den **Figuren 3a und 3b** sind schematische Querschnitte eines ersten Einsatzes 7 und eines zweiten Einsatzes 7' gemäß einer beispielhaften Ausführungsform der vorliegenden Erfindung dargestellt. Es ist wünschenswert mit einem Getränkezubereitungssystem verschiedene Getränke zubereiten zu können. Insbesondere in dem Bereich der Kaffeegetränke gibt es ferner verschiedene Unterarten, die sich geschmacklich zum Teil deutlich voneinander unterscheiden. Zwei derartige Getränke sind beispielsweise ein Espresso, ein vergleichsweise konzentriertes Kaffeeextrakt mit vergleichsweise geringem Getränkevolumen von etwa 25 ml, sowie ein Lungo, ein Kaffeeextrakt mit einem im Vergleich zu einem Espresso höherem Getränkevolumen.

Da eine Brühkammer einer Getränkezubereitungsmaschine unter anderem aus Sicherheitsgründen - auf Grund der hohen Flüssigkeitsdrücke - möglichst gut an die Form der Portionskapsel 1, 1' angepasst sein muss bzw. umgekehrt, ist es wünschenswert mit einer Getränkezubereitungsmaschine nur Portionskapseln 1, 1' mit im Wesentlichen identischen Außenmaßen zu verwenden, d.h, insbesondere mit im Wesentlichen identischen Basiselementen 2.

Um dennoch verschiedene Getränke mit insbesondere verschiedenen Mengen an Getränkerohmaterial in hoher Qualität zubereiten zu können, muss das Innenvolumen des Hohlraums des Basiselements 2 entsprechend variabel sein. Alternativ ist es auch bekannt, die Brühkammer volumenvariabel vorzusehen, so dass auch Portionskapseln mit unterschiedlichen Außenmaßen verwendbar sind.

Erfindungsgemäß wird nun vorgeschlagen, zur Anpassung des Innenvolumens des Basiselements 2, bzw. zur Anpassung der Aufteilung des Innenvolumens des Basiselements 2, unterschiedliche Einsätze 7, 7' vorzusehen. Vorgeschlagen werden daher wenigstens eine erste Portionskapsel 1 mit einem ersten Einsatz 7 und eine zweite Portionskapsel 1' mit einem zweiten Einsatz 7, wobei die Portionskapseln 1, 1' vorzugsweise ein im Wesentlichen identisches Basiselement 2 umfassen, aber unterschiedliche Einsätze 7, 7'.

In **Figur 3a** ist nun ein erster Einsatz 7 dargestellt, wie er beispielsweise einer zur Zubereitung eines Lungo geeigneten ersten Portionskapsel 1 zugeordnet ist, während in **Figur 3b** ein zweiter Einsatz 7' dargestellt ist, wie er insbesondere einer zur Zubereitung eines Espresso geeigneten zweiten Portionskapsel 1' zugeordnet ist. Dabei entspricht das jeweilige Basiselement 2 der ersten Portionskapsel 1 und der zweiten Portionskapsel 1' beispielsweise der im Zusammenhang mit den **Figuren 1a,** **1b und 2** erläuterten Ausführungsformen.

Es ist unmittelbar ersichtlich, dass der erste Einsatz 7 und der zweite Einsatz 7' sich im Wesentlichen in ihrer Höhe h₁, h₂ unterscheiden. Insbesondere weisen beide Einsätze 7, 7' eine umlaufende, hier im Wesentlichen zylindrische, Seitenwand 8 mit demselben Durchmesser auf, wobei die Einsätze 7 ,7' einen hier horizontal angeordneten und vorzugsweise einstückig mit der Seitenwand 8 ausgebildeten Boden aufweisen. Dieser Boden umfasst eine Vielzahl von Öffnungen, durch die die in die Portionskapsel 1, 1' eingeführte Flüssigkeit hindurchtreten kann, um mit dem Getränkerohmaterial zu interagieren. Umgekehrt sind die Öffnungen insbesondere derart ausgebildet, dass das Getränkerohmaterial nicht hindurchtreten kann. Der Boden ist beispielsweise in Form eines Siebbodens 9, also als im Wesentlichen plane Fläche mit einer Vielzahl von gleichmäßig über die Fläche verteilten Öffnungen, ausgebildet.

Außen an der Seitenwand 8 ist hier jeweils ein lippenartiger und schräg nach oben abstehender umlaufender Vorsprung 10 vorgesehen. Dieser Vorsprung 10 ist vorzugsweise dazu vorgesehen, in im Folgenden noch näher zu beschreibender Weise form- und/oder kraftschlüssig mit dem Basiselement 2 derart zu interagieren, dass der Einsatz 7, 7' vorzugsweise ortsfest in dem Basiselement 2 befestigt bzw. angeordnet ist.

In den **Figuren 3a und 3b** ist deutlich zu erkennen, dass der Vorsprung 10 jeweils in im Wesentlichen gleichen Abstand von einer oberen Kante der Seitenwand 8 angeordnet ist. Die Seitenwand 8 des ersten Einsatzes 7 ist jedoch wesentlich kürzer als die Seitenwand 8 des zweiten Einsatzes 7'. Somit ist auch der Siebboden 9 des zweiten Einsatzes 7' weiter unten angeordnet als der Siebboden 9 des ersten Einsatzes 7.

Beispielsweise weist der erste Einsatz 7 hier eine Höhe h₁, also eine vertikale Erstreckung parallel zu der Längsachse A, von etwa 7,17 mm auf, während der zweite Einsatz 7' eine Höhe h₂ von etwa 13,17 mm aufweist.

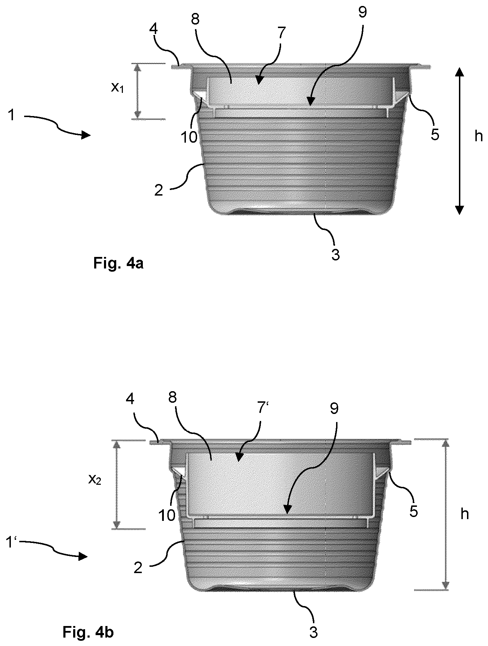

In **Figur 4a** ist ein schematischer Querschnitt einer ersten Portionskapsel 1 gemäß einer beispielhaften Ausführungsform der vorliegenden Erfindung dargestellt. Diese Ausführungsform entspricht dabei im Wesentlichen den in den **Figuren 1 bis 3a** dargestellten Ausführungsformen, so dass auf die entsprechenden Ausführungen verwiesen wird.

Hier ist insbesondere das Basiselement 2 aus **Figur 2** mit einem eingesetzten ersten Einsatz 7 dargestellt, so dass die Darstellung eine erste Portionskapsel 1 zeigt. Bei der ersten Portionskapsel 1 handelt es sich dabei vorzugsweise um einen ersten Typ der Portionskapsel, die durch den ersten Einsatz 7 für eine bestimmte Menge (d.h. Masse) an Getränkerohmaterial optimiert ist. Durch die Wahl einer bestimmten Art von Getränkerohmaterial und bestimmten Mengen lassen sich dabei auch verschiedene Unterarten von ersten Portionskapseln 1 erstellen. Analoges gilt entsprechend für die im Zusammenhang mit **Figur 4b** erläuterte zweite Portionskapsel 1'.

Wie in **Figur 4a** ersichtlich ist, wird der erste Einsatz 7 unterhalb der Öffnung in dem Basiselement 2 angeordnet. Der Vorsprung 10 wirkt dabei mit der Stapelschulter 5 derart formschlüssig zusammen, dass der erste Einsatz 7 nicht weiter nach unten in den Hohlraum rutscht. Umgekehrt wird eine Bewegung nach oben durch einen Formschluss zwischen der oberen Kante der Seitenwand 8 mit der Deckelfolie 6 begrenzt. Vorzugsweise weist der erste Einsatz 7 also ein gewisses Spiel auf. Alternativ kann der erste Einsatz 7 jedoch auch fest mit dem Basiselement 2 form-, kraft- und/oder stoffschlüssig verbunden sein, beispielsweise kann der erste Einsatz 7 über den Vorsprung 10 in dem Basiselement 2 verklemmt werden.

Der erste Einsatz 7 trennt nun das Innenvolumen des Hohlraums des Basiselements 2 grob in zwei Bereiche, also zwei Teilvolumina. Zum einen ist oberhalb des ersten Einsatzes 7, also insbesondere zwischen dem Siebboden 9 und der Deckelfolie 6 ein erstes Volumen vorgesehen, welches als Sammelraum für die während der Zubereitung durch die Deckelfolie 6 in die Portionskapsel 1 eingebrachte Flüssigkeit dienen kann. Dieses erste Volumen wird auch als effektives Volumen bezeichnet.

Da die erste Portionskapsel 1 und die zweite Portionskapsel 1' vorzugsweise den gleichen Durchmesser und die gleiche Höhe h sowie die gleiche Form aufweisen, kann das effektive Volumen beispielsweise durch einen ersten Abstand x₁ zwischen der Unterkante des ersten Einsatzes 7 und der Deckelfolie charakterisiert werden. Dieser erste Abstand x₁ beträgt vorliegend insbesondere etwa 9,59 mm.

Das für das Getränkerohmaterial (maximal) zur Verfügung stehende Volumen ergibt sich somit insbesondere aus der Differenz des Innenvolumens des Hohlraums (hier etwa 25 ml) und dem effektiven Volumen. Die hier dargestellte erste Portionskapsel 1 ist dabei besonders zur Zubereitung eines Lungo mit etwa 6,0 g bis 6,5 g oder gar bis zu 7,0 g Kaffeepulver geeignet. Besonders bevorzugt wird das untere Volumen nicht vollständig durch das Getränkerohmaterial ausgefüllt. Insbesondere falls der erste Einsatz 7, wie hier dargestellt, mit etwas Spiel in dem Basiselement 2 angeordnet ist, wird das Kaffeepulver nicht durch den ersten Einsatz 7 komprimiert, sondern es verbleibt ein geringes Leervolumen in dem unteren Hohlraum.

Vorzugsweise ist der jeweilige Einsatz 7, 7' derart auf die Menge des Getränkerohmaterials abgestimmt, dass der Einsatz 7, 7' das Getränkerohmaterial zwar nicht komprimiert, aber im Wesentlichen an seinem Platz hält, insbesondere derart, dass das Getränkerohmaterial sich nicht unkontrolliert in der Portionskapsel 1, 1' bewegen kann. Somit kann eine mangelhafte Extraktion durch eine Verlagerung des Getränkerohmaterials vorteilhafterweise ausgeschlossen werden.

In **Figur 4b** ist ein schematischer Querschnitt einer zweiten Portionskapsel 1' gemäß einer beispielhaften Ausführungsform der vorliegenden Erfindung dargestellt. Die obigen Ausführungen im Zusammenhang mit **Figur 4a** gelten hier entsprechend. Hier weist der zweite Einsatz 7' eine größere axiale Länge, also eine größere Höhe h₂ auf, bzw. der zweite Abstand x₂ ist größer als der erste Abstand x₄. In der hier dargestellten Ausführungsform beträgt der zweite Abstand x₂ beispielsweise etwa 15,58 mm.

Das dadurch für das Getränkerohmaterial freibleibende Volumen ist in dem vorliegenden Fall optimal für einen hochwertigen Espresso, mit einer Menge an Getränkerohmaterial, also hier Kaffeepulver, von etwa 5,5 g bis etwa 6,0 g.

### Bezugszeichenliste

- 1, 1': erste/zweite Portionskapsel
- 2: Basiselement
- 3: Bodenbereich
- 4: Rand
- 5: Stapelschulter
- 6: Deckelfolie
- 7, 7': erster/zweiter Einsatz
- 8: Seitenwand
- 9: Siebboden
- 10: Vorsprung

- A: Längsachse
- h: Höhe der Portionskapsel
- h₁: Höhe des ersten Einsatzes
- h₂: Höhe des zweiten Einsatzes
- x₁: erster Abstand
- x₂: zweiter Abstand

## Patentansprüche

1. Getränkezubereitungssystem zur Zubereitung eines Getränks unter Verwendung einer Portionskapsel, wobei das System eine Getränkeherstellungsmaschine und eine Portionskapsel umfasst, wobei die Getränkeherstellungsmaschine eine Brühkammer zur Aufnahme der Portionskapsel aufweist, wobei die Portionskapsel ein Basiselement aufweist, welches einen Hohlraum aufspannt, wobei der Hohlraum teilweise mit einem Getränkerohmaterial gefüllt ist, und wobei die Portionskapsel einen im Hohlraum angeordneten Einsatz aufweist, welcher ein Verrutschen des Getränkerohmaterial im Hohlraum wenigstens teilweise verhindert, wobei der Einsatz ein Wasserverteiler ist, **dadurch gekennzeichnet, dass** das Getränkezubereitungssystem wenigstens eine erste Portionskapsel und wenigstens eine zweite Portionskapsel umfasst, wobei die erste Portionskapsel einen ersten Einsatz aufweist und wobei die zweite Portionskapsel einen zweiten Einsatz aufweist, wobei der erste Einsatz ungleich dem zweiten Einsatz ausgebildet ist.

2. Getränkezubereitungssystem nach Anspruch 1, wobei der zweite Einsatz entlang der Längsachse der Portionskapsel, welche insbesondere einer Rotationsymmetrieachse entspricht, eine größere Erstreckung als der erste Einsatz aufweist.

3. Getränkezubereitungssystem nach einem der vorherigen Ansprüche, wobei sich der erste Einsatz entlang der Längsachse über 20 bis 40 Prozent, bevorzugt 25 bis 35 Prozent, besonders bevorzugt von 27,5 bis 32,5 Prozent der Gesamterstreckung der Portionskapsel entlang der Längsachse erstreckt.

4. Getränkezubereitungssystem nach einem der vorherigen Ansprüche, wobei der erste Einsatz entlang der Längsachse eine Erstreckung von 4 bis 10 mm, bevorzugt 6 bis 8 mm, besonders bevorzugt 6,5 bis 7,5 mm aufweist.

5. Getränkezubereitungssystem nach einem der vorherigen Ansprüche, wobei sich der zweite Einsatz entlang der Längsachse über 40 bis 65 Prozent, bevorzugt 45 bis 60 Prozent, besonders bevorzugt von 50 bis 55 Prozent der Gesamterstreckung der Portionskapsel entlang der Längsachse erstreckt.

6. Getränkezubereitungssystem nach einem der vorherigen Ansprüche, wobei der zweite Einsatz entlang der Längsachse eine Erstreckung von 8 bis 18 mm, bevorzugt 12 bis 14 mm, besonders bevorzugt 12,5 bis 13,5 mm aufweist.

7. Getränkezubereitungssystem nach einem der vorherigen Ansprüche, wobei der erste Einsatz ein kleineres effektives Volumen als der zweite Typ von Einsatz aufweist.

8. Getränkezubereitungssystem nach einem der vorherigen Ansprüche, wobei der erste Einsatz 25 bis 45 Prozent, bevorzugt 30 bis 42 Prozent und besonders bevorzugt 34 bis 38 Prozent des Innenvolumens des Hohlraums effektiv einnimmt.

9. Getränkezubereitungssystem nach einem der vorherigen Ansprüche, wobei der zweite Einsatz 50 bis 65 Prozent, bevorzugt 55 bis 60 Prozent und besonders bevorzugt 57 bis 58 Prozent des Innenvolumens des Hohlraums effektiv einnimmt.

10. Getränkezubereitungssystem nach einem der vorherigen Ansprüche, wobei die erste Portionskapsel eine erste Menge an Getränkerohmaterial aufweist und wobei die zweite Portionskapsel eine zweite Menge an Getränkerohmaterial aufweist, wobei die erste Menge ungleich der zweiten Menge ist.

11. Getränkezubereitungssystem nach Anspruch 10, wobei die erste Menge größer als die zweite Menge ist.

12. Getränkezubereitungssystem nach einem der Ansprüche 10 oder 11, wobei die erste Menge 5,5 bis 9,5 g, bevorzugt 6,5 bis 8,5 g, besonders bevorzugt 7 bis 8 g umfasst.

13. Getränkezubereitungssystem nach einem der Ansprüche 10 bis 12, wobei die erste Menge 55 bis 75 Prozent, bevorzugt 58 bis 70 Prozent und besonders bevorzugt 62 bis 66 Prozent des Innenvolumens des Hohlraums effektiv einnimmt.

14. Getränkezubereitungssystem nach einem der Ansprüche 10 bis 13, wobei die zweite Menge 4 bis 8 g, bevorzugt 5 bis 7 g, besonders bevorzugt 5,5 bis 6,5 g umfasst.

15. Getränkezubereitungssystem nach einem der Ansprüche 10 bis 14, wobei die zweite Menge 45 bis 50 Prozent, bevorzugt 40 bis 45 Prozent und besonders bevorzugt 42 bis 43 Prozent des Innenvolumens des Hohlraums effektiv einnimmt.

16. Getränkezubereitungssystem nach einem der vorherigen Ansprüche, wobei die Gesamterstreckung entlang der Längsachse, das Außenvolumen und/oder die äußere Formgebung der ersten Portionskapsel identisch zur zweiten Portionskapsel ist, wobei die Gesamterstreckung insbesondere zwischen 20 und 32, bevorzugt zwischen 25 und 28, besonders bevorzugt zwischen 26 und 27 mm beträgt.

17. Getränkezubereitungssystem nach einem der vorherigen Ansprüche, wobei das Innenvolumen des Hohlraums zwischen 20 und 27 ml, bevorzugt zwischen 22 und 25 ml, besonders bevorzugt zwischen 23 und 24 ml und ganz besonders bevorzugt bei im Wesentlichen 23,5 ml liegt.

18. Getränkezubereitungssystem nach einem der vorherigen Ansprüche, wobei das effektive Volumen des ersten Einsatzes zwischen 6 und 10 ml, bevorzugt zwischen 7 und 9 ml und besonders bevorzugt bei im Wesentlichen 8 ml liegt.

19. Getränkezubereitungssystem nach einem der vorherigen Ansprüche, wobei das Volumen der ersten Menge zwischen 13,5 und 17,5 ml, bevorzugt zwischen 14,5 und 15,5 ml und besonders bevorzugt bei im Wesentlichen 15,5 ml liegt.

20. Getränkezubereitungssystem nach einem der vorherigen Ansprüche, wobei das effektive Volumen des zweiten Einsatzes zwischen 8 und 13 ml, bevorzugt zwischen 10 und 11 ml und besonders bevorzugt bei im Wesentlichen 10,5 ml liegt.

21. Getränkezubereitungssystem nach einem der vorherigen Ansprüche, wobei das Volumen der zweiten Menge zwischen 10,5 und 15,5 ml, bevorzugt zwischen 12,5 und 13,5 ml und besonders bevorzugt bei im Wesentlichen 13 ml liegt.

22. Verwendung einer ersten Portionskapsel und/oder einer zweiten Portionskapsel zur Zubereitung eines Getränks in einem Getränkezubereitungssystem gemäß einem der vorhergehenden Ansprüche.
